# EUROPÄISCHE PATENTSCHRIFT

(11) **EP 2 027 670 B1**
(45) Veröffentlichungstag und Bekanntmachung des Hinweises auf die Patenterteilung: **25.02.2015**
(21) Anmeldenummer: 07725553.7
(22) Anmeldetag: 25.05.2007
(51) Int. Cl.: H04L 12/22, H04L 29/06, G06Q 20/38

(54) **VERFAHREN ZUM ABSICHERN VON IP VERBINDUNGEN FÜR NETZBETREIBERZUSAMMENSCHALTUNGEN**
METHOD FOR SECURING IP CONNECTIONS FOR NETWORK OPERATOR COMBINATORY CONNECTIONS
PROCÉDÉ DE PROTECTION DES CONNEXIONS IP POUR DES INTERCONNEXIONS ENTRE EXPLOITANTS DE RÉSEAU

(30) Priorität: 01.06.2006 DE 102006025603
(43) Veröffentlichungstag der Anmeldung: 25.02.2009
(73) Patentinhaber: Deutsche Telekom AG, 53113 Bonn (DE)
(72) Erfinder: BRITSCH, Matthias, 53639 Königswinter (DE)
(74) Vertreter: Riebling, Peter
(86) Internationale Anmeldenummer: PCT/EP2007/004657
(87) Internationale Veröffentlichungsnummer: WO 2007/137770

(56) Entgegenhaltungen:
- EP-A- 1 313 287
- US-A1- 2005 083 974

## Beschreibung

Die Erfindung betrifft Verfahren zum Absichern vom IP Verbindungen für Netzbetreiberzusammenschaltungen.

Im Internet werden normalerweise verbindungs- oder zugangsbasierte Vergebührungsmodelle angewendet. Daher bezahlen Benutzer normalerweise den Zugang für eingehende und ausgehende Verbindungen oder Nachrichten. Die Diensteanbieter brauchen daher keine Abrechnungsbeziehung zueinander aufzubauen, weil die Anbieter beider Endkunden jeweils von diesen bezahlt werden.

In der Telefonie ist das Bild völlig anders. Hier ist es üblich, dass der Anrufer bezahlt, wobei dieses Modell global als gültiges Modell etabliert ist. In diesem Modell wird der Initiator einer Verbindung von seinem Anbieter vergebührt und alle anderen Anbieter bis zum terminierenden Teilnehmer müssen eine Abrechnungsbeziehung zum Verkehr erzeugenden Anbieter aufgebaut haben. Dies gilt für alle Dienstearten, Zugang, Sprache, generische Verbindungen, Nachrichten und reine Dienste.

Mit dem verschmelzen der Telefonie- und der Internetwelt muss das "Anrufer bezahlt"-Modell auch im Internet eingeführt werden, aber bis jetzt sind die technischen Grundlagen für ein solches Verfahren im Bereich der Internetprotokolle nicht beschrieben oder implementiert.

Grundlage einer relevanten Abrechnungsinformation ist die Identifikation und die nachfolgende Authorisierung des Partners.

Das am weitesten verbreitete Protokoll für Signalisierung und Nachrichtenversendung im Internetbereich ist SIP (Session Initiation Protocol). SIP ist ein Signalisierungsprotokoll zum Aufbau, der Modifikation und zum Beenden von Sitzungen zwischen zwei oder mehreren Kommunikationspartnern.

Das textorientierte Protokoll basiert auf HTTP und kann Signalisierungsdaten per TCP oder UDP über IP-Netze übertragen. Es ist damit Grundlage für VoIP-Videotelefonie- und Multimedia-Dienste in Echtzeit. Im IP Multimedia Subsystem ist SIP die Basis für Verbindungen, die zwischen Mobilfunk-Teilnehmern über ein IP-Netz hergestellt werden. Dies ermöglicht kostengünstige Kommunikationsformen wie Push to Talk over Cellular. SIP ist in den RFCs 3261-3265 definiert. In SIP sind User Agent, Proxy Server, Redirect Server und der Registrator definiert. SIP basiert auf eine kombinierte Client-/Server-Architektür. Der Client ist der User Agent (UAC), der einen SIP-Request initialisiert, das heißt Anrufe initiiert. Der Server ist der User Agent Server (UAS), der einen SIP-Request bedient und SIP Response (Antworten) sendet, d.h. die Anrufe vermittelt bzw. empfängt. Ein Back-to-Back User Agent (B2BUA) ist eine Anwendung, die als Vermittler zwischen zwei Teilnehmern fungiert, jedoch beiden Teilnehmern gegenüber als Endpunkt auftritt. Er dient bei der Bearbeitung von Sitzungsanfragen gleichzeitig als UAS/UAC. SIP verwendet die Transport-Protokolle TCP und UDP für die Übertragung. Die Vermittlung der Datenpakete folgt der Logik von IP-Anwendungen. Die Teilnehmer werden mit URL und DNS adressiert. Somit lässt sich die SIP-Telefonie in Browser-Umgebungen und Webservices implementieren. Die Dienste, die SIP bereitstellt, sind:
- Benutzerlokalisierung: Bestimmung der Endsysteme, die für die verwendete Kommunikation verwendet werden;
- Anrufaufbau: Aufbau der Verbindung sowie Bestimmung der Verbindungsparameter;
- Verfügbarkeitsprüfung: Überprüfung, ob die angerufene Party bereit und willig ist, einen eingehenden Anruf anzunehmen;
- Anrufbehandlung: Der Transfer und der Abbau von Verbindungen.

Das SIP Protokoll wird auch für die nächste Generation von Netzen verwendet werden die gerade von 3GPP, ETSI und ITU-T standardisiert werden.

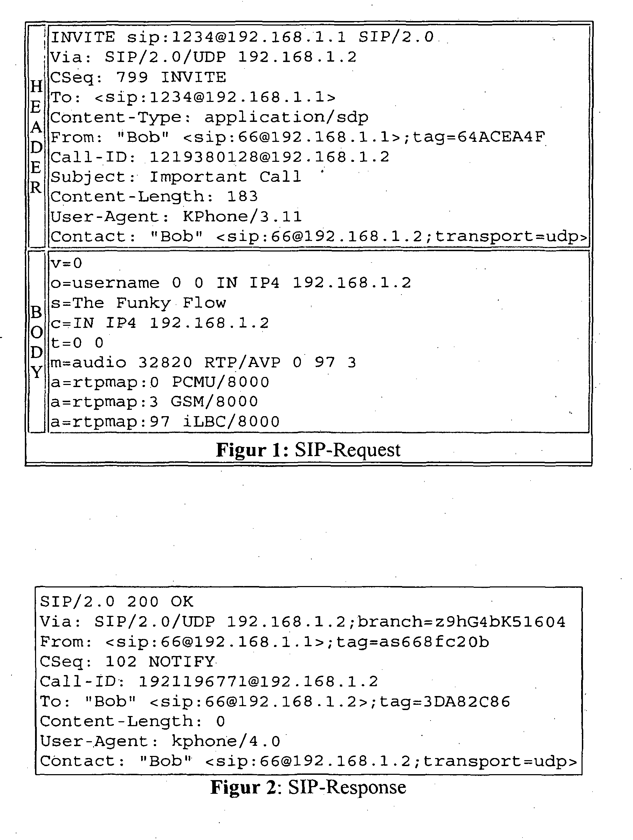

Die Figuren 1 und 2 zeigen den Aufbau von SIP-Nachrichten. Jede Nachricht besteht aus einer ersten Zeile, die den Nachrichtentyp angibt, gefolgt vom Rest des Nachrichtenkopfes (Headers) und einem Nachrichtenkörper (Body). Es gibt dabei zwei Nachrichtentypen: Requests und Responses. Requests dienen dazu, etwas zu initiieren oder den Empfänger über irgendetwas zu benachrichtigen. Durch die Responses wird der Empfang eines Requests bestätigt und der Status der Bearbeitung mitgeteilt.

Einen typischen SIP-Request zeigt Figur 1. Die erste Zeile beinhaltet den Nachrichtentyp - in diesem Fall ein INVITE-Request. Dieser dient dazu, eine Session zu eröffnen. VIA-Felder geben den Weg an, über den die SIP-Responses später geroutet werden sollen.

"From" und "To" dienen dazu, den Sender und Empfänger der Nachricht zu spezifizieren (vgl. e-mail). Über die Call-ID können die zum gleichen Anruf gehörenden Nachrichten identifiziert werden. Die CSeq gibt die Reihenfolge der Requests an.

Mittels des Contact-Feldes gibt der Sender an, wo er die Antworten des Empfängers erwartet. Die übrigen Header sind von untergeordneter Bedeutung. Header und Body sind durch eine Leerzeile voneinander getrennt. Der Body eines INVITE-Requests enthält u.a. die in SDP kodierte Beschreibung der vom Sender unterstützten Medientypen. In diesem Beispiel beherrscht das Endgerät z.B. die Audiocodecs PCM law, GSM und iLBC. Alle weiteren Requests sind in ähnlicher Form aufgebaut. Zu diesen zählen ACK, BYE, CANCEL und REGISTER.

Jeder SIP-Request, außer ACK, muss mit einer geeigneten Response beantwortet werden. Bis auf die erste Zeile ist der Aufbau der Response dem eines Requests ähnlich. Im Beispiel von Figur 2 befindet sich in der ersten Zeile die SIP-Version, ein Reply-Code (der ähnlich wie bei HTTP aufgebaut ist, vgl. Tabelle 1) und ein Erklärungstext.

**Tabelle 1: SIP Reply Codes**

| Code | Bedeutung |
|---|---|
| ***1xx*** | Provisional. Der Request wurde empfangen und wird nun verarbeitet |
| ***2xx*** | Success. Die Anfrage wurde erfolgreich empfangen und verarbeitet |
| ***3xx*** | Redirection. Der Anruf wird an einen anderen Server weitergeleitet |
| ***4xx*** | Client Error. Es ist ein Fehler auf der Clientseite aufgetreten |
| ***5xx*** | Server Error. Es ist ein Fehler auf der Serverseite aufgetreten |
| ***6xx*** | Global Failure. Die Anfrage kann von keinem Server erfüllt werden |

SIP wurde im Internetbereich entworfen und beinhaltet keine Authentisierung von Servern, wender einseitig noch gegenseitig. Alle beschriebenen Netzstandards werden Gebrauch von Servern machen, in Form von Proxy-Servern, Registrar-Servern öder B2BUAs. Netzzusammenschaltungen werden in Form von Verbindungen zwischen solchen Servern implementiert.

US 2005/083974 A1 offenbart ein Verfahren zu Verarbeitung von Routinginformationen bei IP Verbindungen bei einer Zusammenschaltung eines Kommunikationsnetzes eines ersten Netzbetreibers mit einem Kommunikationsnetz mindestens eines zweiten Netzbetreibers unter Verwendung des Session Initiation Protokolls, SIP, bei dem die Routinginformationen durch manipulierte Routinginformationen ersetzt und verschlüsselt übertragen werden.

EP 1 313 287 A2 beschreibt ein Verfahren zum Vertraulichkeitsschutz einer SIP Nachricht bei dem für die Nachricht ein temporärer Identitätsindex erzeugt wird, der dem Absender-Empfänger-Paar zugeordnet wird, anhand dessen diese die Nachricht identifizieren können.

Es ist die Aufgabe der Erfindung, ein Verfahren zum Absichern von IP Verbindungen für Netzbetreiberzusammenschaltungen anzugeben, so dass beispielsweise eine anruferseitigen Abrechnung von Telekommunikationsdienstleistungen bei IP-Verbindungen, insbesondere bei IP-Telefonie, auch bezeichnet als "Voice over IP", durchgeführt werden kann.

Diese Aufgabe wird erfindungsgemäß durch ein Verfahren mit den Merkmalen des Patentanspruchs 1 gelöst.

Bevorzugte Ausgestaltungen und weitere vorteilhafte Merkmale der Erfindung sind in den Unteransprüchen angegeben.

Die vorliegende Erfindung beschreibt ein Weg, wie vorhandene Internetprotokolle mit neuen Methoden kombiniert werden können, um eine solche Identifikations- und Authorisierungsmethode für eine Abrechnung und für alle anderen für die Zusammenschaltung relevanten Aufgaben, die eine garantierte Identifikation des Partners erfordern, hauptsächlich, aber nicht beschränkt für Verkehrsterminierung, aufzubauen.

Die Erfindung beruht auf der Benutzung eines Schlüsselpaares aus öffentlichem und privatem Schlüssel für eine Authentisierung zwischen einer sendeseitigen Instanz und einer empfangsseitigen Instanz. Diese Verschlüsselung kann ferner durch ein Identifizierungsmerkmal für den Schlüssel ergänzt werden, das nur den beteiligten Parteien bekannt ist und die Benutzung verschiedener Schlüssel erlaubt.

Mehrere Ausführungsbeispiele der Erfindung werden nun anhand der Zeichnungsfiguren beschrieben.
Figur 1 beschreibt den Aufbau einer SIP-Request Nachricht;
Figur 2 beschreibt den Aufbau einer SIP-Response Nachricht;
Figur 3 zeigt die beteiligten Instanzen und den Kommunikationsfluss im Fall eines grundlegenden Mechanismus des erfindungsgemäßen Verfahrens;
Figur 4 zeigt die beteiligten Instanzen und den Kommunikationsfluss im Fall eines transaktionsnummern-basierten Mechanismus des erfindungsgemäßen Verfahrens;
Figur 5 zeigt die beteiligten Instanzen und den Kommunikationsfluss im Fall eines voll authentisierten Mechanismus des erfindungsgemäßen Verfahrens.

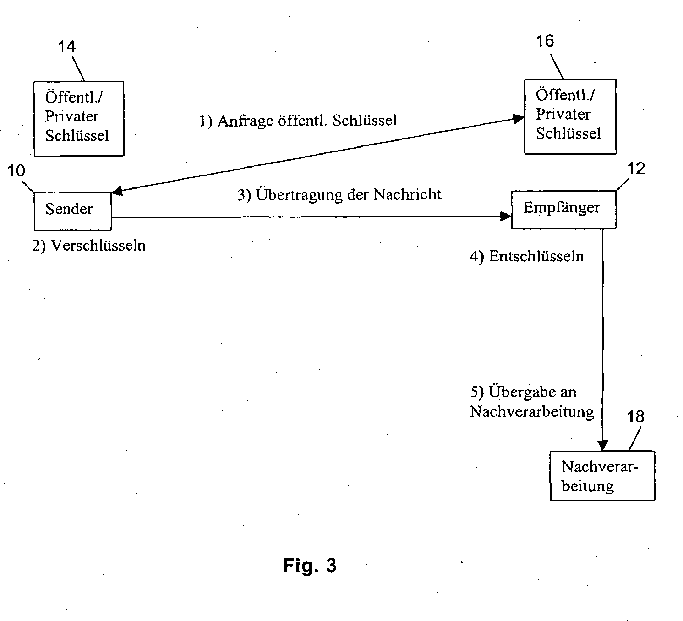

In Figur 3 ist der grundlegende Mechanismus für die Authentisierung durch Verwendung eines Schlüsselpaares aus öffentlichem und privatem Schlüssel dargestellt, wie sie normalerweise für Verschlüsselung im Rahmen einer abgesicherten Transportverbindung (TLS), zum Beispiel SSL, verwendet werden.

Zwischen einer sendeseitigen Instanz 10 und einer empfangsseitigen Instanz 12 soll eine Nachrichtenübertragung stattfinden. Sowohl die sendeseitige Instanz 10 als auch die empfangsseitige Instanz 12 verfügt über ein öffentliches und privates Schlüsselpaar 14 bzw. 16. Der Mechanismus basiert auf einem öffentlichen und einem privaten Schlüssel, wobei der öffentliche Schlüssel des Schlüsselpaares 16 der empfangsseitigen Instanz 12 von der verbindungsaufbauenden Instanz 10 ermittelt, beispielsweise von einer Datenbank geladen, wird (Schritt 1). Der öffentliche Schlüssel 16 wird zur Verschlüsselung der Nachricht verwendet (Schritt 2). Die Verschlüsselung ist dadurch garantiert, dass nur der Besitzer des korrespondierenden privaten Schlüssels, also die empfangsseitige Instanz 12, die Nachrichten wieder entschlüsseln kann.

Obwohl SIP Mechanismen beinhaltet, um Verkehr zu verschlüsseln die auch teilweise auf öffentlich/privaten Schlüsselpaaren basieren, zum Beispiel die Benutzung von S-MIME, sind diese nicht für die Identifikation oder Authentisierung von SIP Servern geeignet, weil das Protokoll diese Mechanismen für die Benutzung durch Signalisierungsendpunkte vorgesehen hat.

Es wird erfindungsgemäß also ein öffentlich/privates Schlüsselpaar 14 bzw. 16 benutzt, um den Kommunikationsverkehr nur auf einem bestimmten Abschnitt des Kommunikationsfades zu verschlüsseln, zwischen zwei Instanzen (Servern) 10 bzw. 12, die zu unterschiedlichen Netzdomänen gehören. Dies soll nicht ausschließen, dass sich weitere Server im Pfad zwischen ver- und entschlüsselndem Server 10 bzw. 12 befinden. Deshalb ist bei der Verschlüsselung zu berücksichtigen, dass nur die Teile der Nachrichtenköpfe (Header) der SIP Nachricht zu verschlüsseln sind, die für das Routing nicht benutzt werden und die nicht verpflichtend sind.

Bei eintreffen einer SIP Nachricht kann der sendeseitige Server eines verschlüsselten Abschnitts die Zieldomäne mit der Liste der Domänen von Partnern vergleichen und im Fall eines positiven Ergebnis den Verschlüsselungsmechanismus benutzen.

Die sendeseitige Instanz 10 ermittelt den öffentlichen Schlüssel der terminierenden, sprich empfangsseitigen Instanz (Domäne) 12, falls er nicht anders verfügbar gemacht wird, zum Beispiel durch Konfiguration, manuelle Erzeugung, einen externen Prozesses oder herunterladen, durch einen externen Prozess. Wenn die SIP Nachricht oder der Nachrichtenkörper bereits verschlüsselt sind, zum Beispiel durch S-MIME und es sich um einen SIP Request handelt, verschlüsselt der Mechanismus einen der nicht verschlüsselten Header, wobei der VIA Header eine Möglichkeit ist.

Wenn die Nachricht eine SIP Response ist, kann der VIA Header nicht verwendet werden, eine Möglichkeit in diesem Fall ist der FROM Header.

Wenn die Nachricht ein nicht verschlüsselter SIP Request ist, werden alle Felder verschlüsselt, ausgenommen die verpflichtenden Felder, wie sie definiert sind in RfC3261.

Wenn die Nachricht eine nicht verschlüsselte SIP Response ist, werden alle Felder verschlüsselt, ausgenommen die verpflichtenden Felder, wie sie definiert sind in RfC3261. Nach der Verschlüsselung kann entweder ein privater Header eingefügt werden, der angibt, welche Teile der Nachricht verschlüsselt sind, oder es kann auch ein Identifizierungsmerkmal für den Schlüssel eingefügt werden, das nur den beteiligten Parteien bekannt ist und die Benutzung verschiedener Schlüssel für verschiedene Kommunikationspartner gestattet. Außerdem kann die empfangende Instanz 12 auf die Art der Verschlüsselung aufgrund der Domäneninformation in den unverschlüsselten Headern rückschließen.

Dann wird die Nachricht an die empfangsseitige Instanz 12 weitergeleitet (Schritt 3).

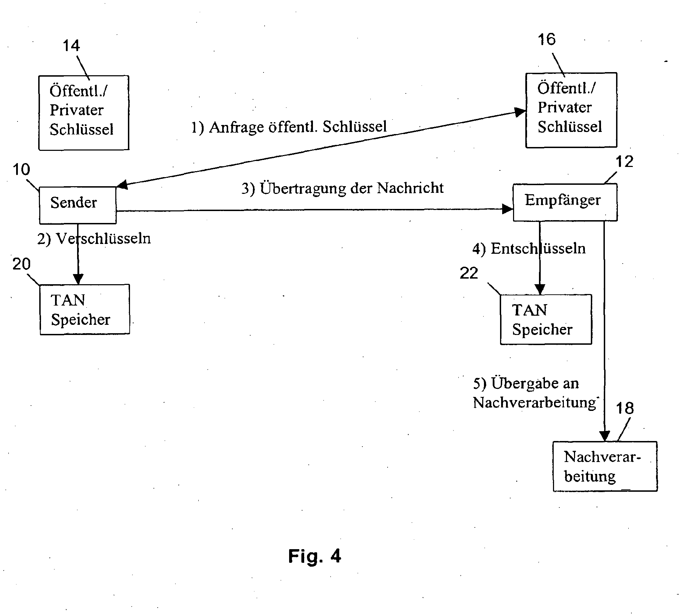

Auf der Empfangsseite 12 wird das private Headerfeld nach dem Empfang der Nachricht ausgewertet, der korrespondierende private Schlüssel zum verwendeten öffentlichen Schlüssel des Schlüsselpaares 16 geladen und die Nachricht entschlüsselt (Schritt 4). Danach können die Abrechnungs- und Netzzusammenschaltungsrelevanten Parameter aus der Nachricht extrahiert werden und an andere Instanzen 18 der Nachverarbeitungskette weitergereicht werden (Schritt 5). Dies kann auch Echtzeitabrechnung für Prepaidteilnehmer beinhalten Figur 4 zeigt einen Transaktionsnummern-basierten Mechanismus, der auf dem grundlegenden Mechanismus aufbaut. Daher gelten die Ausführungen zu Figur 3 in gleicher Weise für Figur 4. Gemäß Figur 4 stellen beide Instanzen 10 bzw. 12 Möglichkeiten bereit, Sätze von einmaligen Transaktionsnummern (TAN) auf Anfrage zu übertragen. Die Transaktionsnummern werden beispielsweise in Datenbanken 20 bzw. 22 vorgehalten. Jeder Satz von Transaktionsnummern gehört zu einer spezifischen Serviceklasse. Jede TAN ist mit einer Seriennummer korreliert.

Die sendeseitige Instanz 10 lädt einen TAN Satz aus der entsprechenden Datenbank 20. Es wird angenommen das dieser Vorgang angemessen abgesichert ist, zum Beispiel durch SSL Verschlüsselung, VPN basierte Verbindungen, etc.

Für jede zu übertragende Nachricht wird eine TAN entsprechend der Serviceklasse der Nachricht ausgewählt. Durch Anwendung von zum Beispiel MD5 Verschlüsselung wird ein Hashwert erzeugt und zusammen mit der Seriennummer entweder in einen privaten Header oder in einen anderen Teil der SIP-Nachricht eingefügt. Dies kann zum Beispiel durch ersetzen oder erweitern der Branch-ID, einfügen in den VIA Header oder ähnliches geschehen.

Die empfangsseitige Instanz 12 extrahiert die TAN aus der übermittelten Nachricht, extrahiert die Seriennummer von der TAN und sucht die entsprechende Serviceklasse. Daraufhin werden alle relevanten Abrechnungsdaten von der Nachricht extrahiert und an die Instanzen 18 der Nachverarbeitungskette weitergeleitet.

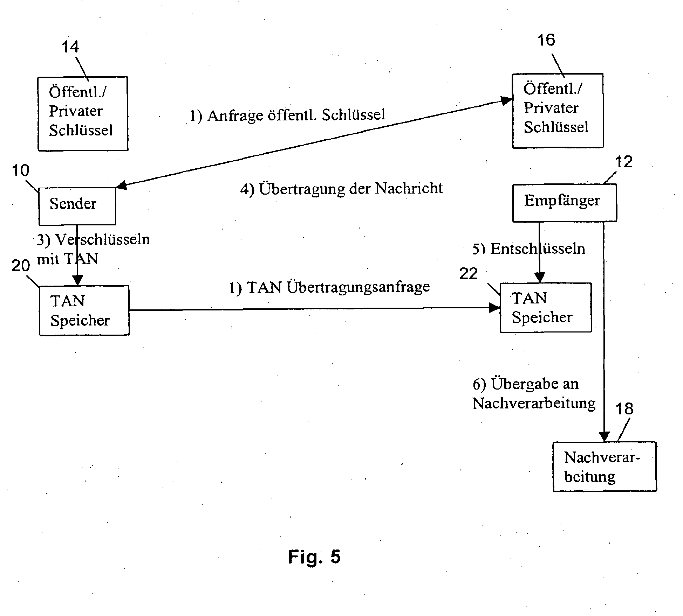

Figur 5 zeigt einen voll authentisierten Mechanismus, der auf den Mechanismen gemäß den Figuren 3 und 4 aufbaut.

Sowohl der grundlegende (Fig. 3) als auch der TAN basierte Mechanismus (Fig. 4) decken alle Funktionen ab die für grundlegende Netzzusammenschaltungen benötigt werden, trotzdem wird für komplexere Prozesse mehr Information benötigt. In diesem Fall können die Mechanismen durch die Verwendung von spezifischen Transaktionsnummern erweitert werden. Die Verteilung dieser spezifischen TANs kann durch eine ganze Reihe von Mechanismen stattfinden, zum Beispiel konfiguriert, heruntergeladen oder durch einen externen Prozess automatisch oder händisch generiert. Um die TANs effizient zu nutzen ist es möglich, verbindungsspezifische TANs aus einer Basis-TAN durch einen geeigneten Mechanismus abzuleiten.

Die Ausgangsbedingungen sind wie im grundlegenden Mechanismus. Bevor der Schlüssel angewendet wird, wird eine TAN ausgewählt und alle für die Geschäftsprozesse notwendigen Daten, entsprechend dem vorher vereinbarten Zusammenschaltungsvertrag, werden angehängt, zum Beispiel Datum, Teilnehmername, Verbindungstyp, Abrechungskategorie, etc.

Dann wird die Zeichenfolge auf der Senderseite 10 verschlüsselt und gesendet. Dazu stehen zwei Alternativen zur Verfügung:
a) Einfügen eines privaten Headers in den Hauptteil (Body) der SIP Nachricht, der die verschlüsselte Zeichenfolge beinhaltet
b) Die unverschlüsselte Zeichenfolge an einen nicht verschlüsselten Teil des SIP Headers anhängen, zum Beispiel VIA Header Einträge, Branch-ID, oder jeden anderen Teil der SIP Nachricht der nicht für das Routing auf dazwischen liegenden Teilverbindungen benutzt wird. Die zusammengefügte Zeichenfolge wird vor dem Senden verschlüsselt.

Die Empfangsseite 12 kann die Verschlüsselungsmethode herausfinden, indem entweder ein privater Header vor dem Senden eingefügt wird oder indem das Schema aufgrund der Identität sendenden Domäne 10 herausgefunden wird auf die aufgrund der Informationen aus einem nicht verschlüsselten Header geschlossen wird.

Nachdem das Verschlüsselungsverfahren identifiziert wurde, wird die Zeichenfolge entschlüsselt und die Informationen werden an die nachverarbeitenden Instanzen 18 weitergeleitet.

Benutzung von Gebührenidentifikatoren (IMS Charging Indentifier: ICID)

Der Mechanismus kann auch die Benutzung von ICIDs einschließen, wie in 3GPP beschrieben. Dafür stehen eine Reihe von Optionen zur Verfügung:
Entweder wird der ICID in die Zeichenfolge vor der Verschlüsselung eingefügt oder danach, wie im Falle der voll authentisierten Mechanismus. Außerdem kann der ICID selbst als TAN verwendet werden oder an die TAN angehängt werden.

Mit dem beschriebenen Mechanismus sind Netzbetreiber in der Lage, das Vergebührungsmodell "calling party pays" auch in offenen Netzen aufrechtzuerhalten und dabei gleichzeitig die SIP Infrastruktur von Drittanbietern zu verwenden. Die Lösung des Identifikations- und Authentisierungsproblems auf Trägerebene würde die beschriebenen Probleme nicht lösen und auch nicht die Benutzung der Infrastruktur von Drittanbietern erlauben. Mit dem vorgeschlagenen Mechanismus kann jeder Betreiber mit jedem anderen über jedes Netz eine Zusammenschaltung vornehmen. Falls eine öffentliche SIP Infrastruktur vorhanden ist kann auch diese verwendet werden.

## Patentansprüche

1. Verfahren zum Absichern von IP Verbindungen bei einer Zusammenschaltung eines Kommunikationsnetzes eines ersten Netzbetreibers mit einem Kommunikationsnetz mindestens eines zweiten Netzbetreibers unter Verwendung des Session Initiation Protokolls, SIP,
**dadurch gekennzeichnet,**
**dass** zur Identifikation und Autorisierung einer an der IP Verbindung beteiligten sendeseitigen Instanz (10) des ersten Netzbetreibers und einer empfangsseitigen Instanz (12) des zweiten Netzbetreibers zumindest Teile einer SIP Nachricht, jedoch zumindest für die Abrechnung der Verbindung benötigten Informationen, zwischen der sendeseitigen Instanz und der empfangsseitigen Instanz verschlüsselt übertragen werden.

2. Verfahren nach dem vorhergehenden Anspruch, **dadurch gekennzeichnet, dass** für die verschlüsselte Übertragung ein asymmetrisches Verschlüsselungsverfahren mit einem öffentlichen Schlüssel und einem privaten Schlüssel verwendet wird.

3. Verfahren nach einem der vorhergehenden Ansprüche, **dadurch gekennzeichnet, dass** die sendeseitige Instanz einen der empfangsseitigen Instanz zugeordneten öffentlichen Schlüssel ermittelt, die für die Abrechnung benötigten Informationen mit diesem öffentlichen Schlüssel verschlüsselt und mittels SIP an die empfangsseitige Instanz übermittelt, und dass in der empfangsseitigen Instanz die mit dem öffentlichen Schlüssel verschlüsselten Informationen mit Hilfe eines korrespondierenden privaten Schlüssels entschlüsselt und weiterverarbeitet werden.

4. Verfahren nach einem der vorhergehenden Ansprüche, **dadurch gekennzeichnet, dass** nur die Teile der Nachrichtenköpfe (Header) der SIP Nachricht verschlüsselt werden, die für das Routing der Nachricht nicht benutzt werden und die nicht verpflichtend sind.

5. Verfahren nach einem der vorhergehenden Ansprüche, **dadurch gekennzeichnet, dass** im Falle die SIP Nachricht oder der Nachrichtenkörper bereits verschlüsselt sind, und es sich um einen SIP Request handelt, mindestens ein noch nicht verschlüsselter Header verschlüsselt wird.

6. Verfahren nach einem der vorhergehenden Ansprüche, **dadurch gekennzeichnet, dass** im Falle die SIP Nachricht ein nicht verschlüsselter SIP Request ist, alle Felder verschlüsselt werden, ausgenommen die verpflichtenden Felder, wie sie in RfC3261 definiert sind.

7. Verfahren nach einem der vorhergehenden Ansprüche, **dadurch gekennzeichnet, dass** im Falle dieSIP Nachricht eine nicht verschlüsselt SIP Response ist, alle Felder verschlüsselt werden, ausgenommen die verpflichtenden Felder, wie sie in RfC3261 definiert sind.

8. Verfahren nach einem der vorhergehenden Ansprüche, **dadurch gekennzeichnet, dass** nach der Verschlüsselung ein privater Nachrichtenkopf (Header) in die SIP Nachricht eingefügt wird, der angibt, welche Teile der Nachricht verschlüsselt sind.

9. Verfahren nach einem der vorhergehenden Ansprüche, **dadurch gekennzeichnet, dass** nach der Verschlüsselung ein Identifizierungsmerkmal für den Schlüssel eingefügt wird, das nur den beteiligten Parteien bekannt ist und die Benutzung verschiedener Schlüssel für verschiedene Partner gestattet.

10. Verfahren nach einem der vorhergehenden Ansprüche, **dadurch gekennzeichnet, dass** in der empfangsseitigen Instanz der private Nachrichtenkopf (Header) nach dem Empfang der SIP Nachricht ausgewertet wird, der korrespondierende private Schlüssel zum verwendeten öffentlichen geladen und die Nachricht entschlüsselt wird, wobei die in der Nachricht enthaltenen Abrechnungsrelevanten Parameter aus der Nachricht extrahiert und an andere nachverarbeitende Instanzen weitergereicht werden.

11. Datenverarbeitungsprogramm mit einem Programmcode, der auf einer Datenverarbeitungsanlage ausgeführt ein Verfahren nach einem der Ansprüche 1 bis 10 durchführt.

12. Datenverarbeitungsprogrammprodukt, das einen auf einer Datenverarbeitungsanlage ausführbaren Programmcode zur Durchführung des Verfahrens nach einem der Ansprüche 1 bis 10 umfasst.

13. Anordnung, die aus mindestens einer Recheneinheit und einem Speicher besteht und zur Ausführung des Verfahrens gemäß den Ansprüchen 1-10 eingerichtet ist.

## Claims

1. Method for securing IP links when a communications network of a first network operator is interconnected to a communications network of at least one second network operator using the session initiation protocol SIP, **characterised in that**, for the identification and authorisation of a transmission instance (10) of the first network operator involved in the IP link and a reception instance (12) of the second network operator, at least portions of a SIP message, but at least information needed for billing the connection, are transmitted in encrypted form between the transmission instance and the reception instance.

2. Method according to the preceding claim, **characterised in that** an asymmetrical encryption method with a public key and a private key is used for encrypted transmission.

3. Method according to one of the preceding claims, **characterised in that** the transmission instance determines a public key assigned to the reception instance, the information needed for billing is encrypted with this public key and transmitted by SIP to the reception instance, and **in that** in the reception instance the information encrypted with the public key is decrypted by means of a corresponding private key and further processed.

4. Method according to one of the preceding claims, **characterised in that** only the portions of the headers of the SIP message which are not used for routing the message and which are not mandatory are encrypted.

5. Method according to one of the preceding claims, **characterised in that**, in the event that the SIP message or the body of the message is already encrypted, and a SIP request is involved, at least one as yet unencrypted header is encrypted.

6. Method according to one of the preceding claims, **characterised in that**, in the event that the SIP message is an unencrypted SIP request, all fields are encrypted except for the mandatory fields as defined in RfC3261.

7. Method according to one of the preceding claims, **characterised in that**, in the event that the SIP message is an unencrypted SIP response, all fields are encrypted except for the mandatory fields as defined in RfC3261.

8. Method according to one of the preceding claims, **characterised in that** after encryption a private header which indicates which portions of the message are encrypted is inserted in the SIP message.

9. Method according to one of the preceding claims, **characterised in that** after encryption an identifier for the key which is known only to the parties involved and permits the use of different keys for different partners is inserted.

10. Method according to one of the preceding claims, **characterised in that** in the reception instance the private header is evaluated after reception of the SIP message, the private key corresponding to the public one used is downloaded and the message is decrypted, wherein the billing-relevant parameters contained in the message are extracted from the message and forwarded to other post-processing instances.

11. Data processing program having a program code which, when executed on a data processing system, carries out a method according to one of claims 1 to 10.

12. Data processing program product, which comprises a program code that can be executed on a data processing system for carrying out the method according to one of claims 1 to 10.

13. Arrangement which consists of at least one computing unit and one memory and is designed for carrying out the method according to claims 1-10.

## Revendications

1. Procédé pour protéger des connexions IP dans le cas d'une interconnexion entre un réseau de communication d'un premier exploitant de réseau et un réseau de communication d'au moins un deuxième exploitant de réseau à l'aide d'un Protocole d'ouverture de session, SIP,
**caractérisé en ce que** pour l'identification et l'autorisation d'une instance côté émission (10), impliquée dans la connexion IP, du premier exploitant de réseau et d'une instance prévue côté réception (12) du deuxième exploitant de réseau, des parties au moins d'un message SIP, mais au moins des informations nécessaires pour la facturation de la connexion, sont transmises de manière chiffrée entre l'instance côté émission et l'instance côté réception.

2. Procédé selon l'une des revendications précédentes, **caractérisé en ce que** pour la transmission chiffrée, on utilise un procédé de chiffrage asymétrique avec une clé publique et une clé privée.

3. Procédé selon l'une des revendications précédentes, **caractérisé en ce que** l'instance côté émission détermine une clé publique affectée à l'instance côté réception, les informations nécessaires pour la facturation sont chiffrées avec cette clé publique et sont transmises à l'aide du SIP à l'instance côté réception, et **en ce que** dans l'instance côté réception, les informations chiffrées avec la clé publique sont déchiffrées et traitées à l'aide d'une clé privée correspondante.

4. Procédé selon l'une des revendications précédentes, **caractérisé en ce que** seules les parties des en-têtes du message SIP qui ne sont pas utilisées pour l'acheminement du message et qui ne sont pas génératrices d'obligations sont chiffrées.

5. Procédé selon l'une des revendications précédentes, **caractérisé en ce que** dans les cas où le message SIP ou le corps de message sont déjà chiffrés et où il s'agit d'une demande SIP, au moins un en-tête non encore chiffré est chiffré.

6. Procédé selon l'une des revendications précédentes, **caractérisé en ce que** dans les cas où le message SIP est une demande SIP non chiffrée, toutes les zones sont chiffrées, sauf les zones génératrices d'obligations telles qu'elles sont définies dans RfC3261.

7. Procédé selon l'une des revendications précédentes, **caractérisé en ce que** dans les cas où le message SIP est une réponse SIP non chiffrée, toutes les zones sont chiffrées, sauf les zones génératrices d'obligations telles qu'elles sont définies dans RfC3261.

8. Procédé selon l'une des revendications précédentes, **caractérisé en ce qu'**après le chiffrage, un en-tête de message privé est inséré dans le message SIP et indique quelles parties du message sont chiffrées.

9. Procédé selon l'une des revendications précédentes, **caractérisé en ce qu'**après le chiffrage, une caractéristique d'identification qui n'est connue que des parties impliquées est insérée pour la clé, et l'utilisation de différentes clés pour différents partenaires est autorisée.

10. Procédé selon l'une des revendications précédentes, **caractérisé en ce que** dans l'instance côté réception, l'en-tête de message privé est analysé après réception du message SIP, la clé privée correspondante est chargée pour la clé publique utilisée et le message est déchiffré, étant précisé que les paramètres importants pour la facturation qui sont contenus dans le message sont extraits du message et sont transmis à d'autres instances de traitement.

11. Programme informatique avec un mode de programme qui, exécuté sur une installation informatique, met en oeuvre un procédé selon l'une des revendications 1 à 10.

12. Produit de programme informatique qui comprend un code de programme, apte à être exécuté sur une installation informatique, pour la mise en oeuvre du procédé selon l'une des revendications 1 à 10.

13. Dispositif qui se compose d'au moins une unité de calcul et d'une mémoire et qui est conçu pour la mise en oeuvre du procédé selon les revendications 1 à 10.
